# EUROPÄISCHE PATENTSCHRIFT

(11) **EP 2 419 568 B1**
(45) Veröffentlichungstag und Bekanntmachung des Hinweises auf die Patenterteilung: **04.03.2020**
(21) Anmeldenummer: 10721640.0
(22) Anmeldetag: 14.04.2010
(51) Int. Cl.: E02B 15/04, B63B 35/32

(54) **VORRICHTUNG ZUM AUFNEHMEN VON PARTIKELN VON EINER GEWÄSSEROBERFLÄCHE**
APPARATUS FOR PICKING UP PARTICLES FROM THE SURFACE OF A WATER SYSTEM
DISPOSITIF DESTINÉ À RECEVOIR DES PARTICULES PROVENANT D'UNE SURFACE DE COURS D'EAU

(30) Priorität: 14.04.2009 DE 102009016960
(43) Veröffentlichungstag der Anmeldung: 22.02.2012
(73) Patentinhaber: Technische Universität Berlin, 10623 Berlin (DE)
(72) Erfinder: CLAUSS, Guenther, 14197 Berlin (DE); SPRENGER, Florian, 12157 Berlin (DE)
(74) Vertreter: Bittner, Thomas L.
(86) Internationale Anmeldenummer: PCT/DE2010/000420
(87) Internationale Veröffentlichungsnummer: WO 2010/118733

(56) Entgegenhaltungen:
- DE-A1- 2 917 614
- DE-A1- 10 221 069
- DE-U1-202004 019 997
- FR-A1- 2 431 420
- GB-A- 1 510 670
- US-A- 3 966 615

## Beschreibung

Die Erfindung betrifft eine Vorrichtung zum Aufnehmen von Partikeln von einer Gewässeroberfläche, insbesondere Schmutzpartikel.

### Hintergrund der Erfindung

Es besteht vielfach Bedarf, Gewässeroberflächen von Seen oder Meeren von Verschmutzungen zu säubern. Beispielsweise können Schiffshavarien mit verheerenden Folgen für die maritime Fauna und Flora enden und darüber hinaus eine wirtschaftliche Katastrophe für die in den verseuchten Gebieten ansässige Fischerei- und Tourismusbranche nach sich ziehen. Folge einer Schiffshavarie kann insbesondere eine Verschmutzung mit auslaufendem Öl sein.

Die Ursachen für Ölverschmutzungen von Gewässeroberflächen sind jedoch nicht auf Schiffsunfälle beschränkt. Öleintrag erfolgt auch durch Industrie in küstennahen Gebieten, undichte Pipelines am Ort der Ölförderung selbst, natürlichen Öleintrag am Meeresboden sowie bewussten Öleintrag durch Schiffsbesatzungen. Zur Beseitigung der auf verschiedene Weise entstehenden Ölteppiche im Bereich der Gewässeroberfläche werden Ölbekämpfungssysteme, insbesondere Ölbekämpfungsschiffe genutzt. In Verbindung mit dem Abschöpfprozess des ausgelaufenen Öls besteht häufig das Problem, dass aufgrund des Seegangs die Ölbekämpfungsmaßnahmen unterbrochen werden müssen. Derartige Unterbrechungen haben nachteilige Folgen für den gesamten Ölbekämpfungseinsatz, insbesondere kann sich das ausgelaufene Öl über einen größeren Bereich der Gewässeroberfläche als dünne Ölschicht ausbreiten. Darüber hinaus kommt es bei Seegang zum Zerteilen des Ölteppichs in kleine Öllachen, die im Rahmen des Bekämpfungseinsatzes nur schwer zu orten sind. Des Weiteren emulgiert das Öl, d. h. es verbindet sich mit Wasser und Luft und wird hierdurch zunehmend viskoser, was die Trennung des Öls von der Gewässeroberfläche sowie die spätere Separation an Bord der Ölbekämpfungsschiffe deutlich erschwert.

Aus dem Dokument DE 21 21 646 A1 ist ein Wasserfahrzeug zum Bekämpfen von Ölschichten bekannt. Bei dem Wasserfahrzeug ist im Bereich eines Bugabschnitts eine Öffnung vorgesehen, durch die beim Fahren des Wasserfahrzeugs über eine Gewässeroberfläche mit Schmutzpartikeln, insbesondere Ölpartikeln, verschmutztes Wasser in einen Laderaum gelangt, aus dem die Schmutzpartikel mit Hilfe einer Saugeinrichtung abgesaugt werden können. Nach dem Passieren der Öffnung in dem Bugabschnitt strömt das mit Schmutzpartikeln beladene Wasser an einer Kante vorbei in den Laderaum.

Aus dem Dokument DE 102 21 069 A1 ist eine Vorrichtung zum Aufnehmen von Partikeln von einer Gewässeroberfläche bekannt, bei dem eine hydrodynamische Separation genutzt wird. Beim Abschöpfen eines Ölfilms auf einem Gewässer strömt dieser entlang einer Bugunterseite der Ölaufnahmevorrichtung bis zu einer Separationsklinge. die den Ölfilm von der Hauptströmung trennt und in einen Partikelseparationsraum leitet, der auch als Moonpool bezeichnet wird. An einer Abrisskante der Separationsklinge entsteht ein Wirbel, der das aufzunehmende Öl zur freien Wasseroberfläche in dem Partikelseparationsraum beschleunigt. Das auf diese Weise in den Partikelseparationsraum gelangte partikelhaltige Wasser wird weiter aufbereitet, indem die Ölpartikel über eine Rampe aus dem Partikelseparationsraum in einen Partikelsammelraum gelangen. Der Partikelsammelraum dient der Konzentration der separierten Partikel. Von dort werden die Partikel in Speichertanks gepumpt.

Bei der bekannten Vorrichtung zum Aufnehmen von Partikeln von der Gewässeroberfläche bildet die Separationsklinge ein starres Element im Bereich der Wandung des Rumpfes, welches zum Ausbilden der Einström- und der Ausströmöffnung ausgefahren wird. Dieser Vorgang erfordert einen erheblichen mechanischen Kraftaufwand, was es notwendig macht, entsprechende mechanische Systeme zum Verlagern der Separationsklinge vorzusehen. Da die bekannte Separationsklinge nicht strukturell mit dem Rumpf verbunden ist, reduziert diese die Festigkeit des Schiffskörpers.

Das Dokument US 3,966,615 A offenbart eine Vorrichtung zum Aufnehmen von Öl von einer Wasseroberfläche. Die Vorrichtung weist zwei schwimmfähige Tragrümpfe auf, zwischen denen ein U-förmiger Kanal gebildet ist, der einen Partikelseparationsraum bereitstellt. Aus diesem Partikelseparationsraum werden die zu separierenden Partikel in einen Partikelsammelraum abgepumpt. Der Partikelseparationsraum weist eine Einströmöffnung mit einer Einströmklappeneinrichtung und eine Ausströmöffnung mit einer Ausströmklappeneinrichtung auf, mit deren Hilfe der Zu- und Abstrom in bzw. vom Partikelseparationsraum gesteuert werden kann.

In dem Dokument FR 2 431 420 ist eine Vorrichtung zum Aufnehmen von Öl von einer Wasseroberfläche beschrieben. Die Vorrichtung umfasst eine Kammer, an deren vorderen und hinteren Ende jeweils eine verschließbare Öffnung gebildet ist. Die vordere Öffnung ist auf einem Niveau oberhalb der hinteren Öffnung angeordnet.

Das Dokument DE 20 2004 019 997 U1 offenbart eine schwimmende Wanne zur Aufnahme von Mineralöl von einer Wasseroberfläche mit einem höhenverstellbaren Auftriebskörper.

### Zusammenfassung der Erfindung

Aufgabe der Erfindung ist es, eine verbesserte Vorrichtung zum Aufnehmen von Partikeln von einer Gewässeroberfläche anzugeben, mit der der Prozess der Partikelaufnahme optimierbar ist, insbesondere eine Reaktion auf seegangs- und / oder tiefgangsrelevante Änderungen für die Vorrichtung ermöglicht ist, um situationsabhängig eine optimale Separation der Partikel zu gewährleisten.

Diese Aufgabe wird erfindungsgemäß durch eine Vorrichtung zum Aufnehmen von Partikeln von Gewässeroberfläche, insbesondere Verschmutzungspartikeln, nach dem unabhängigen Anspruch 1 gelöst. Vorteilhafte Ausgestaltungen der Erfindung sind Gegenstand von abhängigen Unteransprüchen.

Erfindungsgemäss bilden zur Lösung der oben gestellten Aufgabe der Partikelseparationsraum und die Partikelsammelräume einen geschlossenen Raum, der gegenüber der Umgebung hermetisch abgeriegelt ist und dessen Innendruck mit Hilfe einer Druckregulierungseinrichtung eingestellt werden kann. So kann die Füllstandshöhe des partikelhaltigen Wassers im Partikelseparationsraum eingestellt werden und die Separation der Schmutzpartikel aus dem Partikelseparationsraum in die Partikelsammelräume über die Böschungs- oder Rampenelemente gesteuert werden.

Mit Hilfe der Klappeneinrichtungen, die eine jeweilige Klappe und einen Betätigungsmechanismus aufweisen, im Bereich der Einströmöffnung und der Ausströmöffnung ist eine flexible Gestaltung der Öffnungen ermöglicht, durch die einerseits das partikelhaltige Wasser in den Partikelseparationsraum einströmt und andererseits das wenigstens teilweise von den Partikeln befreite Wasser aus dem Partikelseparationsraum ausströmt. Das Trennen der Partikel vom einströmenden Wasser erfolgt nach dem Prinzip einer hydrodynamischen Separation. Es ist nicht länger notwendig, eine gesamte Separationsklinge wie im Stand der Technik mechanisch zu verstellen. Vielmehr ist dieses mit Hilfe der Klappeneinrichtungen, die wahlweise auch von einem die Klappeneinrichtungen gemeinsam integrierenden Klappensystem umfasst sein können, auf vereinfachte Art und Weise möglich. Die Einström- und die Ausströmöffnung können mit Hilfe der Kiappeneinrichtungen in optimierter Weise in den Rumpf des Schwimmkörpers integriert werden, wobei insbesondere auch auf unterschiedliche Rumpfformgestaltungen von Schwimmkörpern Rücksicht genommen werden kann.

Die Einström- und die Ausströmklappeneinrichtung sind jeweils zwischen einer geschlossenen und einer geöffneten Stellung verlagerbar, indem eine jeweils zugeordnete Klappe verlagert wird. Es sind in einer Ausgestaltung einer oder beiden Kiappeneinrichtungen zugeordnete Dichtungsmittel vorgesehen, die im jeweils geschlossenen Zustand eine ausreichende Dichtheit der Öffnungen gewährleisten, um in diesem Zustand das Eindringen von Wasser in den Schwimmkörper nahezu oder vollständig zu unterbinden. Die Dichtungsmittel können hierbei entweder nur an den zugeordneten Rumpfabschnitten oder sowohl an der jeweiligen Klappeneinrichtung als auch an den zugeordneten Rumpfabschnitten des Schwimmkörpers ausgebildet sein.

Eine bevorzugte Weiterbildung der Erfindung sieht vor, dass die Einströmklappeneinrichtung und / oder die Ausströmklappeneinrichtung mit einer schwenkbaren Klappe gebildet sind. Die schwenkbare Ausführung einer oder beider Klappen wird insbesondere hinsichtlich der mechanischen Anforderungen für das Verlagern von Klappen bevorzugt.

Bei einer zweckmäßigen Ausgestaltung der Erfindung kann vorgesehen sein, dass die Einströmklappeneinrichtung und / oder die Ausströmklappeneinrichtung mit einer nach außen öffnenden Klappe gebildet sind. Ist die Ausströmklappeneinrichtung nach außen öffnend, ist der Einströmöffnung ein Strömungsleitprofil oder -element nachgelagert, welches einen Transport der Partikel zur Oberfläche des Wassers in dem Separationsraum unterstützt. Die Separation von Partikelströmung und Wasser kann mit Hilfe des Strömungsleitelementes unter Ausnutzung einer Wirbelbildung in dem partikelhaltigen Wasser oder ohne eine solche Wirbelbildung erreicht werden. In einer Ausgestaltung werden mit dem Strömungsprofil oder -leitelement Wirbel in dem partikelhaltigen Wasser induziert, weshalb das Strömungsleitelement bei dieser Ausgestaltung mit einer Wirbel- oder Abrisskante gebildet sein kann. Der Partikelseparationsraum kann so gestaltet werden, dass mittels spezieller strömungstechnischer Formgebung induzierte Wirbel stabilisiert werden.

Eine vorteilhafte Ausführungsform der Erfindung sieht vor, dass die Einströmklappeneinrichtung und / oder die Ausströmklappeneinrichtung mit einer nach innen öffnenden Klappe gebildet sind. Auch bei dieser Ausgestaltung kann der Partikelseparationsraum mittels spezieller strömungstechnischer Formgebung so gestaltet werden, dass induzierte Wirbel stabilisiert werden.

Bevorzugt sieht eine Fortbildung der Erfindung vor, dass die nach innen öffnende Klappe der Einströmklappeneinrichtung in einem oder mehreren geöffneten Zuständen für das durch die Einströmöffnung einströmende, partikelhaltige Wasser ein Strömungsleitelement bildend angeordnet ist. Bei dieser Ausgestaltung übernimmt die Einströmöffnungsklappe die Funktion eines Strömungsleitprofils oder -elementes, um den einfließenden Strom des partikelhaltigen Wassers in einer gewünschten Weise zu lenken. Das Strömungsleitelement kann mit einer Wirbel- oder Abrisskante gebildet oder hiervon frei sein.

Eine Ausgestaltung der Erfindung kann vorsehen, dass die Einströmklappeneinrichtung und / oder die Ausströmklappeneinrichtung mit einer verschiebbaren Klappe gebildet sind. Auch bei dieser Ausführungsform kann vorgesehen sein, dass der Einströmöffnung ein Strömungsleitprofil oder -element nachgelagert ist, welches einen Transport der Partikel zur Oberfläche des Wassers in dem Separationsraum unterstützt.

Bei einer vorteilhaften Ausgestaltung der Erfindung kann vorgesehen sein, dass die Klappe der Einströmklappeneinrichtung und / oder die Klappe der Ausströmklappeneinrichtung an einem Rumpf des Schwimmkörpers montiert sind. In einer zweckmäßigen Ausführungsform erfolgt die Montage derart, dass die jeweilige Klappe schwenkbar montiert ist.

Eine Weiterbildung der Erfindung kann vorsehen, dass zwischen der Einströmöffnung und der Ausströmöffnung eine Bodenplatte an dem Schwimmkörper gebildet ist. Üblicher Weise ist die Einströmöffnung auf der Bugseite der Bodenplatte angeordnet, wohingegen die Ausströmöffnung sich auf der Heckseite der Bodenplatte befindet. Die Bodenplatte ist in einer Ausgestaltung als unbewegliches strukturelles Teil des Rumpfes des Schwimmkörpers gebildet.

Eine bevorzugte Weiterbildung der Erfindung sieht vor, dass die Einströmklappeneinrichtung und / oder die Ausströmklappeneinrichtung wenigstens teilweise an der Bodenplatte gebildet sind. Zweckmäßigerweise sind eine oder beide Klappen an der Bodenplatte endseitig montiert, nämlich auf der Bug- und/oder der Heckseite.

Bei einer zweckmäßigen Ausgestaltung der Erfindung kann vorgesehen sein, dass ein distales Ende der Klappe der Einströmklappeneinrichtung und / oder ein distales Ende der Klappe der Ausströmklappeneinrichtung zumindest im geschlossenen Klappenzustand an der Bodenplatte die jeweils zugeordnete Öffnung abdichtend auflagern. Bei dieser Ausführungsform kann vorgesehen sein, dass einander zugeordnete Abschnitte der Bodenplatte einerseits und der Klappen andererseits beim Auflagern formschlüssig zur Anlage kommen. Beispielsweise weisen die Klappen gerundete oder anders geformte Abschnitte auf, die auf hierzu passend geformten Abschnitten der Bodenplatte zur Auflage kommen. Auch können in einer Ausgestaltung Vertiefungen und zugeordnete Vorsprünge an den Klappen und der Bodenplatte vorgesehen sein. Hierdurch kann beispielsweise die Auflagerung zwischen den zugeordneten Elementen mechanisch stabilisiert werden.

Eine vorteilhafte Ausführungsform der Erfindung sieht vor, dass die Bodenplatte außenseitig auf einer der Einströmöffnung zugewandten Seite und / oder auf einer der Ausströmöffnung zugewandten Seite einen im Vergleich zum mittleren Bodenplattenabschnitt geneigten oder abgerundeten Seitenabschnitt aufweist. Auf diese Art und Weise kann eine Art so genannter Strömungsbuckel gebildet werden, um das Strömungsverhalten des Wassers auf der Außenseite des Rumpfes des Schwimmkörpers zu optimieren.

Bevorzugt sieht eine Fortbildung der Erfindung vor, dass die Klappe der Einströmklappeneinrichtung und / oder die Klappe der Ausströmklappeneinrichtung außenseitig wenigstens abschnittsweise mit einer strömungsoptimierten Oberflächenform gebildet sind. Hierdurch kann bei einer möglichen Ausführungsform insbesondere erreicht werden, dass bei nach innen öffnenden Klappeneinrichtungen die strömungsoptimierte Oberflächenform strömungslenkend wirkt.

Bei einer vorteilhaften Ausgestaltung der Erfindung kann vorgesehen sein, dass die Einströmklappeneinrichtung und / oder die Ausströmklappeneinrichtung unabhängig voneinander hinsichtlich einer jeweiligen Klappenstellung einstellbar sind.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen.
- Fig. 1: eine schematische Darstellung einer Vorrichtung zum Aufnehmen von Partikeln von einer Gewässeroberfläche, bei der auf eine Rumpfunterseite nach außen öffnende Klappen gebildet sind,
- Fig. 2: eine schematische Darstellung einer Vorrichtung zum Aufnehmen von Partikeln von einer Gewässeroberfläche, bei der auf einer Rumpfunterseite nach innen öffnende Klappen gebildet sind,
- Fig. 3: eine schematische Darstellung einer Vorrichtung zum Aufnehmen von Partikeln von einer Gewässeroberfläche, bei der auf einer Rumpfunterseite nach innen öffnende Klappen mit einer strömungsoptimierten Bodenplatte zusammenwirken, und
- Fig. 4: eine schematische Darstellung einer Vorrichtung zum Aufnehmen von Partikeln von einer Gewässeroberfläche, bei der auf einer Rumpfunterseite schiebbar ausgeführte Klappen gebildet sind.

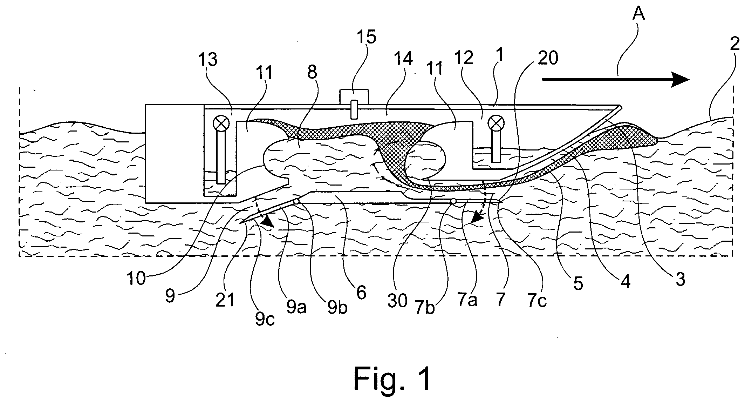

Fig. 1 zeigt eine Vorrichtung zum Aufnehmen von Partikeln von einer Gewässeroberfläche. Ein Rumpfkörper 1 wird entlang der mittels eines Pfeils A schematisch gezeigten Fahrtrichtung über eine Gewässeroberfläche 2 zum Säubern der Gewässeroberfläche 2 bewegt. Beim Bewegen des Rumpfköpers 1 über die Gewässeroberfläche 2 werden Wellen mittels eines Bugabschnitts 3 des Rumpfkörpers 1 beruhigt. Auf der Gewässeroberfläche 2 schwimmende Schmutzpartikel werden durch das Bewegen des Rumpfkörpers 1 über die Gewässeroberfläche 2 in eine Strömung gedrängt, die entlang einer unteren Oberfläche 4 des Rumpfkörpers 1 fließt. Die Strömung mit den Schmutzpartikeln strömt unterhalb des Rumpfkörpers 1 in einen Einlaufbereich 5, in welchem benachbart zu einer Bodenplatte 6 eine Einström- oder Einlauföffnung 7 gebildet ist, durch die hindurch partikelhaltiges Wasser dann in einen Partikelseparationsraum 8 gelangt.

Hinter der Einström- oder Einlauföffnung 7 ist ein Strömungsleitelement oder -profil 30 angeordnet, welches eine Verteilung oder Leitung der Schmutzpartikel in dem Partikelseparationsraum 8 nach oben unterstützt, also in dem Bereich der Wasseroberfläche. Die Leit- oder Verteilfunktion kann mittels Unterstützung von Wirbeln in dem partikelhaltigen Wasserstrom oder im Wesentlichen frei von solchen Wirbeln umgesetzt werden. Im Fall der Nutzung von Wirbeln kann das Strömungsleitelement oder -profil 30 eine Wirbel- oder Abrisskante aufweisen, welche der Wirbelbildung und / oder -unterstützung dient, so dass in dem partikelhaltigen Wasserstrom Wirbel induziert und / oder bestehende Wirbel gezielt unterstützt oder gefördert werden. Wirbel können sich auch über der Auslass- oder Ausströmöffnung 9 des Partikelseparationsraumes 8 bilden. Spezielle, strömungstechnisch optimierte Formelemente 10 dienen bei der dargestellten Ausführungsform der Stabilisierung der Wirbel im Partikelseparationsraum 8. Hierdurch kann zum Beispiel ein pulsierendes Verhalten der Wirbel minimiert oder sogar ganz verhindert werden.

Im Bereich der Einströmöffnung 7 und der Ausströmöffnung 9 ist eine jeweilige Klappe 7a bzw. 9a angeordnet, die als Einströmklappe und als Ausströmklappe bezeichnet werden können und um eine zugeordnete Schwenkachse 7b, 9b zum Öffnen und Schließen der jeweiligen Öffnung schwenkbar sind. Bei der Ausgestaltung in Fig. 1 sind die Klappen 7a, 9a nach außen öffnend gebildet und an der Bodenplatte 6 schwenkbar montiert.

Über Böschungs- oder Rampenelemente 11, die zu einer Separationseinrichtung zum Separieren der Partikel gehören, erfolgt eine Trennung der zu separierenden Partikel aus dem Partikelseparationsraum 8 in benachbart angeordnete Partikelsammelräume 12, 13, in denen die Partikel aufkonzentriert werden. Das genutzte Separationsverfahren entspricht dem Prinzip einer hydrodynamischen Separation.

Bei dem in Fig. 1 dargestellten Betrieb der Vorrichtung zum Aufnehmen von Partikeln von der Gewässeroberfläche 2 ist unter Einbeziehung des Partikelseparationsraums 8 und der Partikelsammelräume 12, 13 ein geschlossener Raum 14 gebildet, der in dargestellten Ausführungsform gegenüber der Umgebung hermetisch abgeriegelt ist, insbesondere mittels einer luftdichten Ausgestaltung. Mit Hilfe einer Druckregulierungseinrichtung 15 wird ein Innendruck in dem geschlossenen Raum 14 eingestellt, um auf diese Weise eine Füllstandshöhe des partikelhaltigen Wassers in dem Partikelseparationsraum 8 einzustellen, wodurch die Füllstandshöhe relativ zu den Böschungs- oder Rampenelementen 11 eingestellt wird, was wiederum die Separation der Schmutzpartikel aus dem Partikelseparationsraum 8 in die Partikelsammelräume 12, 13 beeinflusst. Mit Hilfe der Innendruckregelung kann auf seegangs- und / oder tiefgangsrelevante Änderungen für die Vorrichtung reagiert werden, um situationsabhängig eine optimale Separation der Partikel zu gewährleisten. Hierzu können eine automatische Wasserstandskontrollvorrichtung und / oder eine optische Überwachung des geschlossenen Raumes 14 vorgesehen sein. Durch Kompressoren kann der Innendruck erhöht und der Wasserspiegel gesenkt bzw. der Innendruck gesenkt und der Wasserspiegel angehoben werden.

Die Einströmklappe 7a und die Ausströmklappe 9a sind in Fig. 1 jeweils in einer geöffneten Schwenkstellung dargestellt, die eingestellt wird, indem die Einström- und die Ausströmklappe 7a, 9a um die jeweilige Schwenkachse 7b, 9b an der Bodenplatte 6 geschwenkt werden. An ihren distalen Enden 7c, 9c weisen die Einström- und die Ausströmklappe 7a, 9a Abschrägungen 20, 21 auf, die einerseits strömungsaktiv sind und andererseits eine optimierte Anlagerung der jeweiligen Klappe an den Rumpfkörper 1 im geschlossenen Klappenzustand unterstützen.

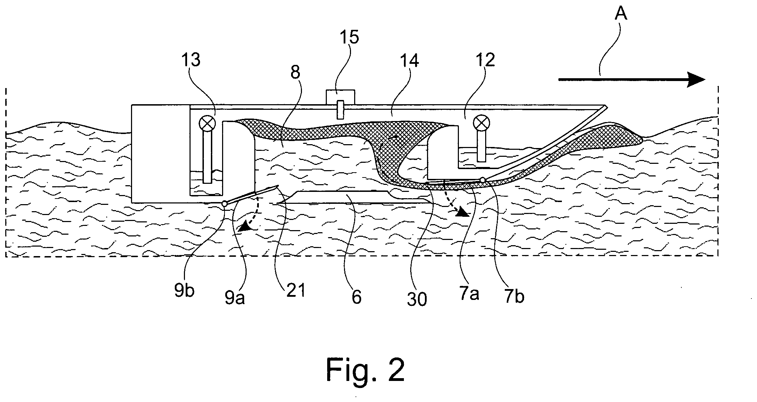

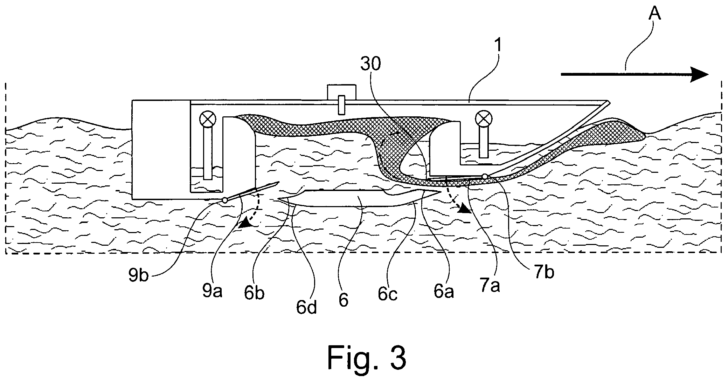

Die Fig. 2 und 3 zeigen schematische Darstellungen von Vorrichtungen zum Aufnehmen von Partikeln von einer Gewässeroberfläche, bei denen die Ein- und die Ausströmklappe 7a, 9a nach innen öffnend ausgeführt sind. Für gleiche Merkmale werden in den Fig. 2 und 3 die gleichen Bezugszeichen wie in Fig. 1 verwendet.

Die Ein- und die Ausströmklappe 7a, 9a sind in den Fig. 2 und 3 in einer geöffneten Stellung dargestellt, was mittels Schwenken der jeweiligen Klappe um die zugeordnete Schwenkachse 7b, 9b erreicht wird, die bei dieser Ausführungsform am Rumpf gebildet ist. Im Unterschied zu der Ausführungsform nach Fig. 1 ist das Strömungsleitelement oder -profil 30 bei den Ausgestaltungen in den Fig. 2 und 3 am distalen Ende 20 der Einströmklappe 7a gebildet.

In der geschlossenen Stellung (nicht dargestellt) lagern die nach innen öffnenden Klappen 7a, 9a auf zugeordneten Auflageabschnitten 6a, 6b an der Bodenplatte 6. Hierbei kommen jeweils oberflächenformangepasste Abschnitte der Klappen 7a, 9a einerseits und der Bodenplatte 6 andererseits zur Anlage.

Bei der Ausführungsform in Fig. 3 weist die Bodenplatte 6 bug- und heckseitig abgeschrägte Abschnitte 6c, 6d auf, wodurch eine Art Strömungsbuckel gebildet ist.

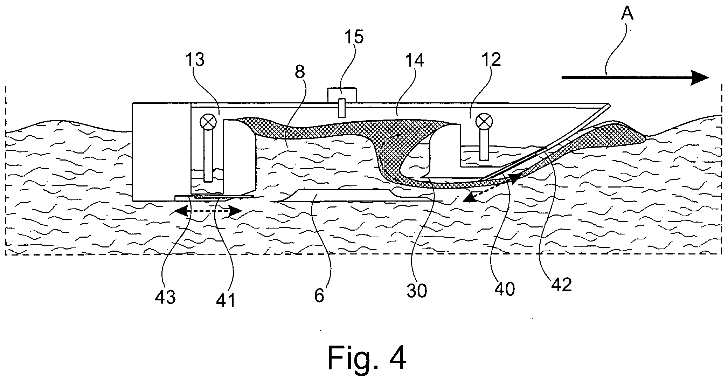

Fig. 4 zeigt eine schematische Darstellung einer Vorrichtung zum Aufnehmen von Partikeln von einer Gewässeroberfläche, bei der auf der Rumpfunterseite schiebbar ausgeführte Klappen 40, 41 gebildet sind, die zum Einstellen der Einströmöffnung 7 und der Ausströmöffnung 9 in zugeordnete Klappenaufnahmen 42, 43 am Rumpfkörper 1 ein- und aus diesen herausgefahren werden.

## Patentansprüche

1. Vorrichtung zum Aufnehmen von Partikeln von einer Gewässeroberfläche, insbesondere Verschmutzungspartikel, mit einem Schwimmkörper (1), in welchem ein Partikelseparationsraum (8) gebildet ist, in den im Betrieb partikelhaltiges Wasser über eine Einströmöffnung (7) einströmt und aus dem von den Partikeln wenigstens teilweise befreites Wasser über eine Ausströmöffnung (9) ausströmt, und in welchem Partikel vom einströmenden Wasser nach dem Prinzip einer hydrodynamischen Separation getrennt werden, wobei Böschungs- oder Rampenelemente (11), die zu einer Separationseinrichtung zum Separieren der Partikel gehören, eingerichtet sind, die zu separierenden Partikel aus dem Partikelseparationsraum (8) in benachbart angeordnete Partikelsammelräume (12, 13) zu trennen, in denen die Partikel aufkonzentriert werden,
**dadurch gekennzeichnet, dass**
- zum jeweiligen Öffnen und Schließen die Einströmöffnung (7) mit einer Einströmklappeneinrichtung und die Ausströmöffnung (9) mit einer Ausströmklappeneinrichtung versehen sind; und
- der Partikelseparationsraum (8) und die Partikelsammelräume (12, 13) einen geschlossenen Raum (14) bilden, der gegenüber der Umgebung hermetisch abgeriegelt ist und dessen Innendruck mit Hilfe einer Druckregulierungseinrichtung (15) eingestellt werden kann, um so eine Füllstandshöhe des partikelhaltigen Wassers im Partikelseparationsraum (8) einzustellen, wodurch die Füllstandshöhe relativ zu den Böschungs- oder Rampenelementen (11) eingestellt wird, was wiederum die Separation der Schmutzpartikel aus dem Partikelseparationsraum (8) in die Partikelsammelräume (12, 13) beeinflusst.

2. Vorrichtung nach Anspruch 1, **dadurch gekennzeichnet, dass** die Einströmklappeneinrichtung und / oder die Ausströmklappeneinrichtung mit einer schwenkbaren Klappe (7a, 9a) gebildet sind.

3. Vorrichtung nach Anspruch 2, **dadurch gekennzeichnet, dass** die Einströmklappeneinrichtung und / oder die Ausströmklappeneinrichtung mit einer nach außen öffnenden Klappe gebildet sind.

4. Vorrichtung nach Anspruch 2, **dadurch gekennzeichnet, dass** die Einströmklappeneinrichtung und / oder die Ausströmklappeneinrichtung mit einer nach innen öffnenden Klappe gebildet sind.

5. Vorrichtung nach Anspruch 4, **dadurch gekennzeichnet, dass** die nach innen öffnende Klappe (7a) der Einströmklappeneinrichtung in einem oder mehreren geöffneten Zuständen für das durch die Einströmöffnung (7) einströmende, partikelhaltige Wasser ein Strömungsleitelement (30) bildend angeordnet ist.

6. Vorrichtung nach Anspruch 1, **dadurch gekennzeichnet, dass** die Einströmklappeneinrichtung und / oder die Ausströmklappeneinrichtung mit einer verschiebbaren Klappe (40; 41) gebildet sind.

7. Vorrichtung nach mindestens einem der vorangehenden Ansprüche, **dadurch gekennzeichnet, dass** die Klappe (7a) der Einströmklappeneinrichtung und / oder die Klappe (9a) der Ausströmklappeneinrichtung an einem Rumpf des Schwimmkörpers (1) montiert sind.

8. Vorrichtung nach mindestens einem der vorangehenden Ansprüche, **dadurch gekennzeichnet, dass** zwischen der Einströmöffnung (7) und der Ausströmöffnung (9) eine Bodenplatte (6) an dem Schwimmkörper (1) gebildet ist.

9. Vorrichtung nach Anspruch 8. **dadurch gekennzeichnet, dass** die Einströmklappeneinrichtung und / oder die Ausströmklappeneinrichtung wenigstens teilweise an der Bodenplatte (6) gebildet sind.

10. Vorrichtung nach Anspruch 8 oder 9. **dadurch gekennzeichnet, dass** ein distales Ende (7c) der Klappe (7a) der Einströmklappeneinrichtung und / oder ein distales Ende (9c) der Klappe (9a) der Ausströmklappeneinrichtung zumindest im geschlossenen Klappenzustand an der Bodenplatte (6) die jeweils zugeordnete Öffnung abdichtend auflagern.

11. Vorrichtung nach mindestens einem der Ansprüche 8 bis 10, **dadurch gekennzeichnet, dass** die Bodenplatte (6) außenseitig auf einer der Einströmöffnung (7) zugewandten Seite und / oder auf einer der Ausströmöffnung (9) zugewandten Seite einen im Vergleich zum mittleren Bodenplattenabschnitt geneigten Seitenabschnitt (6c, 6d) aufweist.

12. Vorrichtung nach mindestens einem der vorangehenden Ansprüche, **dadurch gekennzeichnet, dass** die Klappe (7a) der Einströmklappeneinrichtung und / oder die Klappe (9a) der Ausströmklappeneinrichtung außenseitig wenigstens abschnittsweise mit einer strömungsoptimierten Oberflächenform gebildet sind.

13. Vorrichtung nach mindestens einem der vorangehenden Ansprüche, **dadurch gekennzeichnet, dass** die Einströmklappeneinrichtung und / oder die Ausströmklappeneinrichtung unabhängig voneinander hinsichtlich einer jeweiligen Klappenstellung einstellbar sind.

## Claims

1. A device for picking up particles from a water surface, in particular dirt particles, with a floating body (1), in which a particle separating chamber (8) is formed, into which particle-containing water flows in via an inflow opening (7) during operation, and out of which water at least partially freed of the particles flows via an outflow opening (9), and in which particles are separated from the inflowing water according to the principle of a hydrodynamic separation, wherein incline or slope members (11) belonging to a separation device for separating the particles are set up to separate the particles to be separated from the particle separating chamber (8) into adjacently arranged particle accumulating chambers (12, 13), in which the particles are concentrated,
**characterized in that**
- for respective opening and closing purposes, the inflow opening (7) is provided with an inflow flap assembly and the outflow opening (9) is provided with an outflow flap assembly, and
- the particle separating chamber (8) and particle collecting chamber (12, 13) form a closed chamber (14), which is hermetically sealed off from the environment, and whose internal pressure can be set with the help of a pressure regulating device (15), so as to in this way set a fill level of the particle-containing water in the particle separating chamber (8), as a result of which the fill level is set relative to the incline or slope members (11), which in turn influences the separation of dirt particles from the particle separating chamber (8) into the particle accumulating chambers (12, 13).

2. The device according to claim 1, **characterized in that** the inflow flap assembly and/or the outflow flap assembly is formed with a swivelable flap (7a, 9a).

3. The device according to claim 2, **characterized in that** the inflow flap assembly and/or the outflow flap assembly are formed with an outwardly opening flap.

4. The device according to claim 2, **characterized in that** the inflow flap assembly and/or the outflow flap assembly are formed with an inwardly opening flap.

5. The device according to claim 4, **characterized in that** the inwardly opening flap (7a) of the inflow flap assembly is arranged to form a flow guiding element (30) in one or several opened states for the particle-containing water flowing in through the inflow opening (7).

6. The device according to claim 1, **characterized in that** the inflow flap assembly and/or the outflow flap assembly are formed with a shiftable flap (40; 41).

7. The device according to at least one of the preceding claims, **characterized in that** the flap (7a) of the inflow flap assembly and/or the flap (9a) of the outflow flap assembly are mounted in a hull of the floating body (1).

8. The device according to at least one of the preceding claims, **characterized in that** a floor plate (6) is formed on the floating body (1) between the inflow opening (7) and the outflow opening (9).

9. The device according to claim 8, **characterized in that** the inflow flap assembly and/or the outflow flap assembly are formed at least partially on the floor plate (6).

10. The device according to claim 8 or 9, **characterized in that** a distal end (7c) of the flap (7a) of the inflow flap assembly and/or a distal end (9c) of the flap (9a) of the outflow flap assembly provide a sealing abutment for the respectively allocated opening, at least in the closed flap state on the floor plate (6).

11. The device according to at least one of claims 8 to 10, **characterized in that** the exterior side of the floor plate (6) has a side section (6c, 6d) that is inclined in comparison to the middle floor plate section on a side facing the inflow opening (7) and/or on a side facing the outflow opening (9).

12. The device according to at least one of the preceding claims, **characterized in that** the flap (7a) of the inflow flap assembly and/or the flap (9a) of the outflow flap assembly are formed at least sectionally on the exterior side with a flow-optimized surface shape.

13. The device according to at least one of the preceding claims, **characterized in that** the inflow flap assembly and/or the outflow flap assembly can be adjusted independently of each other with regard to a respective flap position.

## Revendications

1. Dispositif, destiné à absorber des particules, notamment des particules polluantes d'une surface d'un plan d'eau, pourvu d'un corps flottant (1), dans lequel est créé un espace de séparation des particules (8), dans lequel de l'eau contenant des particules en service affluent via un orifice d'affluence (7) et hors duquel de l'eau libérée au moins partiellement des particules s'écoule hors d'un orifice d'écoulement (9) et dans lequel des particules sont séparées de l'eau qui afflue selon le principe d'une séparation hydrodynamique, des éléments formant remblai ou rampe (11), qui font partie d'une installation de séparation destinée à séparer les particules étant aménagés pour dissocier des particules qui doivent être séparées hors de l'espace de séparation des particules (8) dans des espaces collecteurs de particules (12, 13) dans lesquels les particules sont concentrées,
**caractérisé en ce que**
- pour l'ouverture et la fermeture respective, l'orifice d'affluence (7) est muni d'un système de trappes d'affluence et l'orifice d'écoulement (9) est muni d'un système de trappes d'écoulement et
- l'espace de séparation des particules (8) et les espaces collecteurs de particules (12, 13) forment un espace clos (14) qui est hermétiquement verrouillé par rapport à l'environnement et dont la pression intérieure peut se régler à l'aide d'un système régulateur de pression (15), pour régler ainsi une hauteur du niveau de l'eau contenant des particules dans l'espace séparateur de particules (8), suite à quoi le niveau de l'eau est réglé par rapport aux éléments formant remblai ou rampe (11), ce qui influence par conséquent la séparation des particules polluantes hors de l'espace de séparation des particules (8) dans les espaces collecteurs de particules (12, 13).

2. Dispositif selon la revendication 1, **caractérisé en ce que** le système de trappes d'affluence et / ou le système de trappes d'écoulement sont formés d'une trappe (7a, 9a) pivotante.

3. Dispositif selon la revendication 2, **caractérisé en ce que** le système de trappes d'affluence et / ou le système de trappes d'écoulement sont formés d'une trappe s'ouvrant sur l'extérieur.

4. Dispositif selon la revendication 2, **caractérisé en ce que** le système de trappes d'affluence et / ou le système de trappes d'écoulement sont formés d'une trappe s'ouvrant sur l'intérieur.

5. Dispositif selon la revendication 4, **caractérisé en ce que** dans une ou dans plusieurs positions ouvertes, la trappe (7a) s'ouvrant sur l'intérieur du système de trappes d'affluence est placée de sorte à former un élément de guidage de l'écoulement (30) de l'eau contenant des particules qui afflue à travers l'orifice d'affluence (7).

6. Dispositif selon la revendication 1, **caractérisé en ce que** le système de trappes d'affluence et / ou le système de trappes d'écoulement sont formés d'une trappe (40 ; 41) coulissante.

7. Dispositif selon au moins l'une quelconque des revendications précédentes, **caractérisé en ce que** la trappe (7a) du système de trappes d'affluence et / ou la trappe (9a) du système de trappes d'écoulement sont montées sur un fuselage du corps flottant (1).

8. Dispositif selon au moins l'une quelconque des revendications précédentes, **caractérisé en ce qu'**entre l'orifice d'affluence (7) et l'orifice d'écoulement (9), une plaque d'embase (6) est formée sur le corps flottant (1).

9. Dispositif selon la revendication 8, **caractérisé en ce que** le système de trappes d'affluence et / ou le système de trappes d'écoulement sont formés au moins en partie sur la plaque d'embase (6).

10. Dispositif selon la revendication 8 ou 9, **caractérisé en ce qu'**au moins en position fermée des trappes, une extrémité distale (7c) de la trappe (7a) du système de trappes d'affluence et/ ou une extrémité distale (9c) de la trappe (9a) du système de trappes d'écoulement s'appuient de manière à assurer l'étanchéité de l'orifice respectivement associé sur la plaque d'embase (6).

11. Dispositif selon au moins l'une quelconque des revendications 8 à 10, **caractérisé en ce que** la plaque d'embase (6) comporte sur sa face extérieure, sur un côté qui fait face à l'orifice d'affluence (7) et / ou sur un côté qui fait face à l'orifice d'écoulement (9) un segment latéral (6c, 6d) incliné, en comparaison du segment central de la plaque d'embase.

12. Dispositif selon au moins l'une quelconque des revendications précédentes, **caractérisé en ce que** sur sa face extérieure, la trappe (7a) du système de trappes d'affluence et / ou la trappe (9a) du système de trappes d'écoulement est formée au moins par segments avec une forme superficielle optimisant l'écoulement.

13. Dispositif selon au moins l'une quelconque des revendications précédentes, **caractérisé en ce que** le système de trappes d'affluence et / ou le système de trappes d'écoulement sont réglables indépendamment l'un de l'autre au niveau d'une position respective des trappes.
